# EUROPÄISCHE PATENTSCHRIFT

(11) **EP 3 620 340 B1**
(45) Veröffentlichungstag und Bekanntmachung des Hinweises auf die Patenterteilung: **12.10.2022**
(21) Anmeldenummer: 19196584.7
(22) Anmeldetag: 10.09.2019
(51) Int. Cl.: B61L 23/00, B61L 15/00, B61B 12/02, B61B 12/06, B61L 27/57

(54) **LUFTSEILBAHNANLAGE, VERFAHREN ZUM BETRIEB EINER LUFTSEILBAHNANLAGE SOWIE SEILROLLE FÜR EINE LUFTSEILBAHNANLAGE**
AERIAL CABLEWAY SYSTEM, METHOD FOR OPERATING AN AERIAL CABLEWAY SYSTEM AND PULLEY FOR AN AERIAL CABLEWAY SYSTEM
INSTALLATION DE TÉLÉPHÉRIQUE, PROCÉDÉ DE FONCTIONNEMENT D'UNE INSTALLATION DE TÉLÉPHÉRIQUE AINSI QUE POULIE POUR UNE INSTALLATION DE TÉLÉPHÉRIQUE

(30) Priorität: 10.09.2018 EP 18193399
(43) Veröffentlichungstag der Anmeldung: 11.03.2020
(73) Patentinhaber: Bartholet Maschinenbau AG, 8890 Flums (CH)
(72) Erfinder: BARTHOLET, Roland, 8881 Tscherlach (CH)
(74) Vertreter: Dr. Graf & Partner AG

(56) Entgegenhaltungen:
- WO-A1-2010/076644
- DE-A1-102008 015 035

## Beschreibung

Die Erfindung betrifft eine Luftseilbahnanlage, ein Verfahren zum Betrieb einer Luftseilbahnanlage, sowie eine Seilrolle für eine Luftseilbahnanlage.

### Stand der Technik

Ein sicherer und zuverlässiger Betrieb einer Luftseilbahnanlage, beispielsweise einer Pendelseilbahn oder einer Umlaufseilbahn, ist äusserst anspruchsvoll und zudem relativ kostenintensiv. Einerseits ist ein erheblicher Wartungsaufwand erforderlich, um einen sicheren Betrieb der Vielzahl von beweglichen Teilen sicherzustellen. Trotzdem kann es vorkommen, dass z.B. der Verschleiss eines Anlageteils nicht rechtzeitig erkannt wird, woraus ein unvorhergesehener Betriebsunterbruch oder sogar ein Unfall resultieren kann. Zudem sind Luftseilbahnanlagen üblicherweise extremen Witterungsbedingungen wie starkem Wind, Sturm, Regen, Schnee, Hagel oder Frost ausgesetzt. Trotz ausgezeichneter Wartung kann es daher vorkommen, dass aufgrund der herrschenden Witterungsbedingungen eine Betriebseinschränkung erforderlich ist, dass sich ein unvorhergesehener Betriebsunterbruch ergibt, oder dass sogar ein Schaden oder ein Totalausfall der Luftseilbahnanlage auftritt.

Das Dokument EP2384298B1 sowie das zu derselben Patentfamilie gehörende Dokument WO2010/076644A1 offenbaren eine Seilbahnkabine umfassend ein Laufwerk mit Laufrollen, wobei diese Laufrollen auf einem Tragseil aufliegen. Das Laufwerk umfasst eine Führungsvorrichtung mit Führungsschuhen, wobei das Tragseil zwischen diesen Führungsschuhen verläuft. Das Laufwerk umfasst zudem einen an der Führungsvorrichtung angeordneten Sensor, welcher die Distanz zwischen der Führungsvorrichtung und der Oberfläche des Tragseils misst, um dadurch eine ungewöhnliche Lage des Tragseils bezüglich der Führungsvorrichtung beziehungsweise bezüglich einem Referenzpunkt der Seilbahnkabine zu erkennen. Diese Vorrichtung weist den Nachteil auf, dass nur Notsituationen erkennbar sind, bei welchen das Seil bezüglich der Führungsvorrichtung der Seilbahnkabine eine ungewöhnliche oder gefährliche Lage einnimmt. Zudem weist diese Vorrichtung den Nachteil auf, dass nur der jeweilige lokale Abstand zwischen der Oberfläche des Tragseils und der Führungsvorrichtung bzw. der Seilbahnkabine erfassbar ist. Diese Vorrichtung erlaubt es somit nicht eine Luftseilbahnanlage umfassend zu überwachen, sondern erlaubt nur eine Überwachung des relativen Abstandes der Oberfläche des Tragseils zu einem Referenzpunkt der Seilbahnkabine.

### Darstellung der Erfindung

Es ist somit Aufgabe der vorliegenden Erfindung die Betriebssicherheit von Luftseilbahnanlage zu erhöhen.

Diese Aufgabe wird gelöst mit einer Luftseilbahnanlage aufweisend die Merkmale von Anspruch 1. Die abhängigen Ansprüche 2 bis 6 betreffen weitere vorteilhaft ausgestaltete Luftseilbahnanlagen. Die Aufgabe wird weiter gelöst mit einem Verfahren zum Betrieb einer Luftseilbahnanlage aufweisend die Merkmale von Anspruch 7. Die abhängigen Ansprüche 8 bis 13 betreffen weitere vorteilhafte Verfahrensschritte. Die Aufgabe wird weiter gelöst mit einer Seilrolle aufweisend die Merkmale von Anspruch 14. Die abhängigen Ansprüche 15 bis 16 betreffen weitere vorteilhafte Ausgestaltungen.

Die Aufgabe wird insbesondere gelöst mit einer Luftseilbahnanlage umfassend eine Überwachungsvorrichtung, ein Förder-, Zug- oder Tragseil sowie eine Mehrzahl von Seilrollen, wobei zumindest einige der Seilrollen am Seil anliegen, wobei zumindest eine der Seilrollen einen Sensor zum Erfassen einer Zustandsgrösse, ein Steuergerät, eine elektrische Energiequelle sowie eine Drahtlosübertragungsvorrichtung umfasst, und wobei der Sensor über das Steuergerät und die Drahtlosübertragungsvorrichtung signal- oder datenübertragend mit der Überwachungsvorrichtung verbunden ist.

Die Aufgabe wird weiter insbesondere gelöst mit einem Verfahren zum Betrieb einer Luftseilbahnanlage umfassend ein Förder-, Zug- oder Tragseil sowie eine Mehrzahl von Seilrollen, wobei das Seil an zumindest einigen der Seilrollen anliegt, wobei zumindest eine der Seilrollen einen Sensor umfasst, mit welchem eine Zustandsgrösse der Seilrolle erfasst wird, wobei die Zustandsgrösse oder ein davon abgeleiteter Zustandswert drahtlos von der Seilrolle an eine Überwachungsvorrichtung übermittelt wird, und wobei die Luftseilbahnanlage in Abhängigkeit der Zustandsgrösse oder des Zustandswerts überwacht wird.

Die Aufgabe wird weiter insbesondere gelöst mit einer Seilrolle für eine Luftseilbahnanlage, wobei die Seilrolle eine Lauffläche für ein Förder-, Zugoder Tragseil umfasst, wobei dass die Seilrolle einen Sensor zum Erfassen einer Zustandsgrösse, ein Steuergerät, eine elektrische Energiequelle sowie eine Drahtlosübertragungsvorrichtung umfasst, und wobei der Sensor über das Steuergerät und die Drahtlosübertragungsvorrichtung signal- oder datenübertragend mit einer übergeordneten Überwachungsvorrichtung verbindbar ist.

Nachfolgend wird unter einer Zustandsgrösse insbesondere ein von einem Sensor gemessenen bzw. erfassten physikalischen Messwert verstanden. Unter der Zustandsgösse wird auch ein aus dem physikalischen Messwert abgeleiteter Wert verstanden, indem beispielsweise ausgehend von der Zustandsgrösse mit Hilfe eines Steuergerätes, vorzugsweise eines Mikrocontrollers, die Zustandsgrösse weiterverarbeitet und insbesondere unter Zuhilfenahme von Algorithmen und/oder insbesondere unter Berücksichtigung weiterer Zustandsgrössen und/oder sonstiger verfügbarer Daten eine Zustandsgrösse berechnet wird, die auch als ein aus Zustandsgrösse abgeleiteter Zustandswert bezeichnet wird.

Bekannte Luftseilbahnanlagen umfassen eine Vielzahl von Seilrollen, deren Zustand bisher nur sporadisch mittels visueller Kontrolle überprüft werden konnte. Die erfindungsgemässe Seilrolle umfasst zumindest einen Sensor zum Erfassen einer Zustandsgrösse der Seilrolle, und umfasst eine Drahtlosübertragungsvorrichtung zum Übertragen der gemessenen Zustandsgrösse oder eines davon abgeleiteten Zustandswertes an eine Überwachungsvorrichtung, welche vorzugsweise als übergeordnete Überwachungsvorrichtung ausgestaltet ist, welche sich vorzugsweise in einer Antriebs- oder Endstation befindet, oder beispielsweise in einer Leitzentrale zur Überwachung einer Mehrzahl von Luftseilbahnanlagen. Eine Luftseilbahnanlage umfassend zumindest eine derartige erfindungsgemässe Seilrolle, und vorzugsweise umfassend eine Mehrzahl derartiger Seilrollen, weist den Vorteil auf, dass der Zustand der Seilrollen häufig, und vorzugsweise kontinuierlich überwacht werden kann, und dass die Zustandsgrösse oder ein daraus abgeleiteter Zustandswert auf gemessenen, objektiven Werten basiert. Vorzugsweise wird in der erfindungsgemässen Seilrolle nicht nur eine einzige Zustandsgrösse, sondern eine Mehrzahl von Zustandsgrössen und vorteilhafterweise auch eine Mehrzahl unterschiedlicher Zustandsgrössen überwacht. Die zeitliche Überwachungsrate der zumindest einen Zustandsgrösse hängt von der zu überwachenden Zustandsgrösse ab, wobei die Überwachung der Luftseilbahnanlage vorzugsweise in regelmässigen Zeitabständen erfolgt, beispielsweise jede Sekunde, jede Minute, jede Stunde, jeden Tag oder jeden Monat. Die Überwachung kann während des Betriebs der Luftseilbahnanlage erfolgen, während welchem die Seilrollen durch das an den Seilrollen anliegende Seil angetrieben werden, sodass diese zumindest zeitweise und vorzugsweise kontinuierlich rotieren. Die Überwachung kann jedoch auch während eines Stillstands des Seils 101 erfolgen, während welchem die Seilrollen 101 durch das anliegende Seil 101 im Stillstand gehalten werden. Die Überwachung kann zudem auch ausserhalb der Betriebszeit der Luftseilbahnanlage erfolgen, während welcher zumindest einige und vorzugsweise alle Seilrollen stillstehen. Als zu überwachende Grösse ist zumindest eine und vorzugsweise eine Mehrzahl der nachfolgenden Zustandsgrössen geeignet, nämlich:
- Drehzahl der Seilrolle;
- Betrag und vorzugsweise auch Richtung einer auf die Seilrolle einwirkenden Kraft, vorzugsweise einer senkrecht bezüglich der Drehachse der Seilrolle einwirkenden Kraft und besonders vorteilhaft zudem auch einer quer zur Seilrolle, insbesondere einer in Verlaufsrichtung der Drehachse der Seilrolle einwirkenden Kraft, wobei die Kraft vorzugsweise als Vektor mit dessen Betrag und dessen dreidimensionalen Vektorrichtung erfasst oder berechnet wird;
- Abnutzung der Seilrolle, insbesondere eine Abnutzung eines Laufrings der Seilrolle;
- Vibration der Seilrolle, insbesondere zur Überprüfung eines Zustandes eines Lagers der Seilrolle;
- Temperatur der Seilrolle;
- Drehwinkel und/oder Rotationsgeschwindigkeit der Seilrolle in Funktion der Zeit;
- Schlupf zwischen Seilrolle und an der Seilrolle anliegendem Seil;
- Beschleunigung bzw. Schwingung der Seilrolle, insbesondere Schwingung um eine Lagerstelle, beispielsweise ein Wippenlager;
- Beschleunigung bzw. Schwingung einer Rollenbatterie an welcher Seilrollen angeordnet sind;
- GPS Signal zur Positionsbestimmung der Seilrolle;
- Videosignal oder Bildsignal eines an der Seilrolle angeordneten Bildgebers;
- Akustisches Signal eines an der Seilrolle angeordneten Mikrofons;
- Messung von am Seil anliegenden Kräften bei Wind, insbesondere durch Wind verursachte Querkräfte;
- Messung von am Seil anliegenden Kräften bei Windstille, insbesondere durch eine Mastsetzung verursachte Kräfte;
- Messung der auf die Seilrollen verursachten Kräfte, Vibrationen, oder Beschleunigungen verursacht durch ein über die Seilrollen fahrendes Fahrbetriebsmittel.

Eine Luftseilbahnanlage umfasst üblicherweise eine Vielzahl von Seilrollen, beispielsweise an einem Tragmasten angeordnete Tragrollen oder Niederhalterollen, an welchen ein Seil, insbesondere ein Tragseil oder ein Zugseil anliegt. Solche Seilrollen sind üblicherweise gruppenweise in einer Rollenbatterie angeordnet. Seilrollen kommen zudem auch als Laufrollen, beispielsweise einer Seilbahnkabine einer Pendelseilbahn, zum Einsatz, wobei solche Laufrollen auf einem Tragseil aufliegen. Solche Seilrollen können ebenfalls entsprechend der erfindungsgemässen Seilrolle ausgestaltet sein. Da die erfindungsgemässe Seilrolle bezüglich geometrischer Eigenschaften wie Durchmesser oder Breite der Lauffläche vorzugsweise identisch oder ähnlich zu bestehenden Seilrollen ausgestaltet werden kann, besteht auf einfache Weise die Möglichkeit, zumindest einige der bestehenden Seilrollen einer Luftseilbahnanlage durch erfindungsgemässe Seilrollen zu ersetzen. Eine Luftseilbahnanlage kann zudem weitere erfindungsgemässe Seilrollen umfassen, beispielsweise eine Seilscheibe, an welcher ein Förderseil in einer Antriebsstation oder einer Gegenstation umgelenkt wird. Die erfindungsgemässe Seilrolle kann somit an unterschiedlichen Stellen einer Luftseilbahnanlage verwendet werden. Die erfindungsgemässe Seilrolle weist den Vorteil auf, dass diese auf sehr einfache Weise und an unterschiedlichsten Stellen in der Luftseilbahnanlage angeordnet werden kann, ohne dass irgendwelche Kabel verlegt werden müssen. In einer vorteilhaften Ausgestaltung umfasst die Seilrolle als Energiequelle einen integrierten Elektrogenerator und/oder eine Batterie, und/oder einen Energiespeicher und/oder Solarzellen um die Energieversorgung vorzugsweise langfristig, und vorzugsweise auch bei Stillstand der Seilrolle sicherzustellen. Vorzugsweise benötigt die in der Seilrolle angeordneten elektronischen Komponenten wie beispielswiese Sensor, Steuergerät, Kontroller, Prozessor und Drahtlosübertragungsvorrichtung sehr wenig Energie, sodass die Energieversorgung durch eine Batterie während einem längeren Zeitraum von beispielsweise einem Monat ohne Nachladen sichergestellt ist. In einer möglichen Ausgestaltung umfasst die Luftseilbahnanlage zudem ein Fahrzeug zum vorzugsweise drahtlosen Nachladen der Batterien der Seilrollen. Die Verwendung der erfindungsgemässen Seilrollen erfordert keinen oder vorzugsweise einen vernachlässigbar kleinen Mehraufwand bezüglich Montage der erfindungsgemässen Seilrolle in einer bestehenden Luftseilbahnanlage, da die Seilrolle nicht mit Kabeln verbunden werden muss. Die erfindungsgemässe Seilrolle weist zudem den Vorteil auf, dass bereits an der Luftseilbahnanlage sich im Einsatz befindliche Seilrollen auf sehr einfache Weise durch erfindungsgemässe Seilrollen ersetzt werden können. Bestehende Seilrollen und die erfindungsgemässe Seilrollen sind vorteilhafterweise äusserlich beziehungsweise bezüglich der geometrischen Dimension identisch oder beinahe identisch ausgestaltet. Eine bestehende Seilbahn kann daher kostengünstig mit den erfindungsgemässen Seilrollen nachgerüstet werden. Aus der Sicht eines Technikers sind daher nur die bestehenden Seilrollen durch die erfindungsgemässen Seilrollen zu ersetzen, ohne dass sich der Techniker um irgendwelche Anschlüsse und Kabel kümmern muss. Für einen Techniker entsteht daher bei einer Montage der erfindungsgemässen Seilrolle kein oder ein vernachlässigbar kleiner Mehraufwand. Vorzugsweise sind die erfindungsgemässen Seilrollen bezüglich geometrischen Dimensionen kompatibel zu bestehenden Seilrollen ausgestaltet, sodass der Betreiber einer Luftseilbahnanlage frei entscheiden kann, welche bestehenden Seilrollen durch erfindungsgemässe Seilrollen ersetzt werden sollen, ohne dass dadurch bei der Installation ein zusätzlicher Mehraufwand entsteht.

Bei der erfindungsgemässen Luftseilbahnanlage werden vorzugsweise die Zustandsgrössen einer Mehrzahl von Seilrollen erfasst und überwacht. Vorteilhafterweise werden die Zustandsgrössen von zumindest zwei Seilrollen, und besonders vorteilhaft die Zustandsgrössen einer Vielzahl von Seilrollen erfasst und die Zustandsgrösse oder ein davon abgeleiteter Zustandswert jeder der erfindungsgemässen Seilrollen drahtlos an die Überwachungsvorrichtung weitergeleitet. Vorteilhafterweise werden zum Beispiel in einer Rollenbatterie die Zustandsgrössen von zumindest zwei zur Rollenbatterie gehörenden Seilrollen überwacht. Vorteilhafterweise ist die geometrische Ausgestaltung der Rollenbatterie als auch die geometrische Anordnung der erfindungsgemässen Seilrolle in der Rollenbatterie bekannt. Dies ergibt den Vorteil, dass damit auch Eigenschaften der Rollenbatterie überwacht werden können, beispielsweise an der Rollenbatterie anliegende Kräfte und Drehmomente, insbesondere quer zur Verlaufsrichtung des Seils wirkende Kräfte und Drehmomente, welche beispielsweise durch angreifende Winde verursacht werden können. Vorzugsweise kann über die an den Seilrollen und Rollenbatterien angreifenden Kräfte und Drehmomente auch überwacht werden, ob, zum Beispiel bei starkem Wind, ein sicherer Betrieb der Luftseilbahn noch gewährleistet ist, oder ob an gewissen Stellen der Luftseilbahn ein z.B. vorgegebener Grenzwert überschritten wird. In einer besonders vorteilhaften Ausgestaltung umfasst die erfindungsgemässe Seilrolle ein Steuergerät, beispielsweise ausgestaltete als ein Mikrocontroller, das zwischen dem Sensor und der Drahtlosübertragungsvorrichtung geschaltet ist. Der Mikrocontroller ist vorzugsweise programmierbar, und verfügt vorzugsweise über eine Signalverarbeitungsvorrichtung sowie einen Datenspeicher, um die vom Sensor gemessenen Zustandsgrössen zu verarbeiten, beispielweise zu filtern, zu gewichten und/oder zu bewerten, um eine von den gemessenen Zustandsgrössen abgeleitete Zustandsgrösse bzw. zumindest ein von der gemessenen Zustandsgrösse abgeleiteter Zustandswert zu erzeugen, die vorzugsweise über die Drahtlosübertragungsvorrichtung an die Überwachungsvorrichtung weitergeleitet werdend.

In einer besonders vorteilhaften Ausgestaltung erlaubt die Drahtlosübertragungsvorrichtung eine Zweiwegkommunikation mit der Überwachungsvorrichtung bzw. der Leitzentrale, sodass die Seilrolle von der Überwachungsvorrichtung der Luftseilbahnanlage auch Signale und/oder Daten und/oder Programmcode empfangen kann, sodass das Steuergerät der Seilrolle vorzugsweise von aussen, insbesondere von der übergeordneten Überwachungsvorrichtung ansteuerbar und vorteilhafterweise programmierbar ist. In einer besonders vorteilhaften Ausgestaltung wird das Steuergerät derart programmiert, dass diesem für zumindest eine und vorzugsweise jede zu messende Zustandsgrösse eine Signalvorverarbeitung, und beispielsweise ein Schwellenwert vorgegeben wird, und dass die Zustandsgrösse oder ein davon abgeleiteter Zustands nur dann der Überwachungsvorrichtung übermittelt wird, wenn die Zustandsgrösse eine vorgegebene Eigenschaft aufweist bzw. nicht mehr aufweist, beispielsweise indem die Zustandsgrösse den vorgegebenen Schwellenwert überschreitet bzw. unterschreitet. Dies erlaubt es den Datenverkehr bzw. das Datenvolumen zwischen der jeweiligen Seilrolle und der Überwachungsvorrichtung erheblich zu reduzieren. Vorteilhafterweise wird somit bereits in der Seilrolle Verfahren zur Datenreduktion bzw. zur Reduktion der zu übertragenden Daten vorgesehen. Eine weitere Möglichkeit zur Datenreduktion besteht darin, dass die in der Seilrolle anfallenden Daten während einer gewissen Zeitspanne, zum Beispiel fortlaufend während einer Stunde, lokal gespeichert werden, und somit lokal vorgehalten werden, und dass beim Feststellen einer Unregelmässigkeit oder eines Fehlers, z.B. eines Störungsfalls, oder zur detaillierten Überwachung oder Analyse der Seilrolle zumindest ein Teil dieser lokal gespeicherten Daten, z.B. auf Anforderung der Überwachungsvorrichtung oder automatisch durch die Seilrolle, vorzugsweise unmittelbar nach der Erkennung des Störungsfalls, an die Überwachungsvorrichtung übertragen werden, um dort zum Beispiel ausgewertet, analysiert und/oder gespeichert zu werden. Dabei können auch eine Mehrzahl von in der Seilrolle erfassten Zustandsgrössen oder davon abgeleitete Zustandswerte werden in Funktion der Zeit übertragen werden, beispielsweise Vibration, Beschleunigung, akustische Signale, Bilder, Drehzahl oder Rotationsgeschwindigkeit. Diese Werte stehen dann für weitere Analysen zur Verfügung, zum Beispiel zur Durchführung einer Spektrumanalyse, um beispielsweise die in der Seilrolle vorhandene Energie, oder auch Schläge, Seilschwingungen oder Bewegungen der Seilrolle zu messen.

Die erfindungsgemässe Seilrolle umfasst in einer vorteilhaften Ausgestaltung einen Kraft-Sensor zur Messung einer auf die Seilrolle einwirkenden Kraft, oder einen Sensor zur Messung einer an der Seilrolle auftretenden elastischen Verformung bzw. Dehnung. Ein derartiger Sensor kann beispielsweise einen Piezokristall, einen Dehnmessstreifen, einen Glasfasersensor oder ein Glaslinear umfassen.

Die erfindungsgemässe Seilrolle umfasst in einer vorteilhaften Ausgestaltung einen GPS-Sensor, dessen Koordinaten ebenfalls der Überwachungsvorrichtung übermittelt werden können. Die Überwachungsvorrichtung kann somit die geografische Position derjenigen Seilrollen, welche einen GPS-Sensor aufweisen, automatisch richtig ermitteln. Dies ergibt beispielsweise den Vorteil, dass eine Seilrolle ersetzt werden kann, und dass sie Überwachungsvorrichtung danach automatisch in der Lage ist, die genaue Lage der ersetzten Seilrolle zu erkennen und zu bestimmen. Somit ist es nur noch erforderlich eine Seilrolle zu ersetzen, ohne jedoch während der Montage detaillierte Angaben über deren Standort zu erfassen. Zudem kann eine Lageveränderung der Seilrolle erfasst werden, welche zum Beispiel auftritt, wenn sich ein die Seilrolle stützender Tragmasten im Gelände verschiebt.

Die Drahtlossignalübertragung kann mit unterschiedlichen technischen Mitteln und vorzugsweise mit Hilfe elektromagnetischer Wellen erfolgen, abhängig von der zu überbrückenden Funkdistanz beispielsweise Mittels Bluetooth, WLAN, ein drahtloses lokales Netzwerk, ein Mesh-Netzwerk, einen moduliert Lichtstrahl oder über ein digitales Mobilfunknetz wie GSM erfolgen.

Nachfolgend wird die Erfindung anhand von Ausführungsbeispielen im Detail beschrieben.

### Kurze Beschreibung der Zeichnungen

Die zur Erläuterung der Ausführungsbeispiele verwendeten Zeichnungen zeigen:
Fig. 1 eine Seitenansicht einer Seilrolle;
Fig. 2 einen Schnitt durch die Seilrolle gemäss Figur 1 entlang der Schnittlinie A-A;
Fig. 3 eine Detailansicht der Figur 2;
Fig. 4 eine Stirnansicht einer Seilrolle;
Fig. 5 eine Seitenansicht einer Rollenbatterie;
Fig. 6 eine Draufsicht der Rollenbatterie gemäss Figur 5;
Fig. 7 eine Seitenansicht eines Fahrwerks einer Luftseilbahn;
Fig. 8 schematisch eine Luftseilbahnanlage;
Fig. 9 einen Schnitt durch ein weiteres Ausführungsbeispiels einer Seilrolle;
Fig. 10 eine Darstellung der gemessenen Umdrehungszahl einer Seilrolle und des daraus abgeleiteten Rollendurchmessers in Funktion der Zeit.

Grundsätzlich sind in den Zeichnungen gleiche Teile mit gleichen Bezugszeichen versehen.

### Wege zur Ausführung der Erfindung

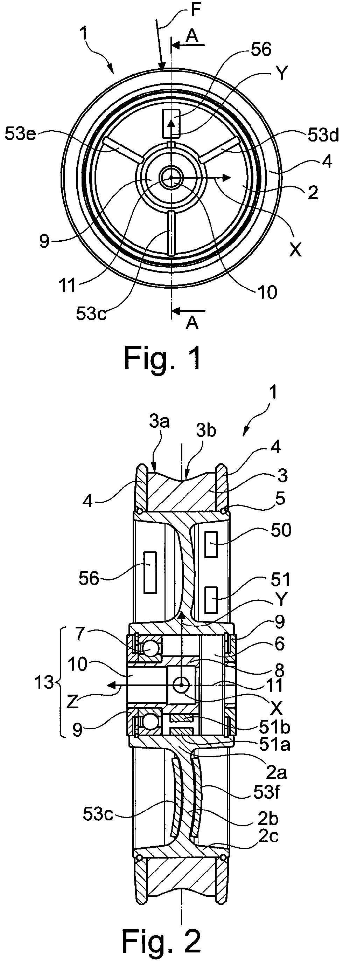

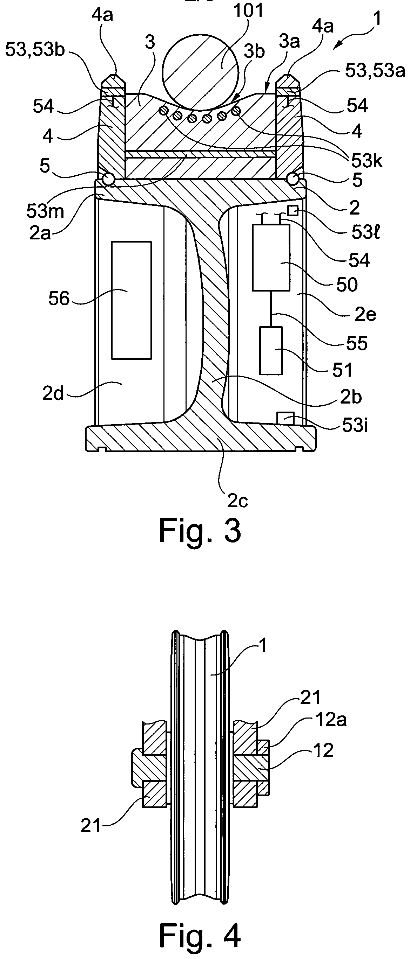

Fig. 1 zeigt eine Seitenansicht einer Seilrolle 1, Figur 2 einen Längsschnitt durch die Seilrolle 1 gemäss Figur 1 entlang der Schnittlinie A-A, und Figur 3 eine Detailansicht des oberen Teils der Seilrolle 1 gemäss Figur 2, wobei zudem noch ein an der Seilrolle 1 anliegendes Trag-, Zug- oder Förderseil 101 dargestellt ist. Diese Seilrolle 1 ist insbesondere geeignet zur Verwendung als Tragrolle oder als Niederhalterolle bei Luftseilbahnanlagen, um ein Förderseil, ein Tragseil oder ein Zugseil 101 der Luftseilbahnanlage zu tragen oder zu führen. Diese Seilrolle 1 ist jedoch auch als eine Laufrolle eines Luftseilbahnfahrzeugs geeignet. Die Seilrolle 1 umfasst einen Rollenkörper 2, der vorzugsweise aus einem Metall, beispielsweise Aluminium gefertigt ist. Entlang der äusseren Umfangsfläche des Rollenkörpers 2 ist ein entlang der gesamten Umfangsfläche verlaufender Laufring 3 angeordnet, der seitlich vorzugsweise beidseitig durch eine Bordscheibe 4 begrenzt ist, wobei zum sicheren Halt der Bordscheibe 4 vorzugsweise ein Sicherungsring 5 zwischen dem Rollenkörper 2 und der Bordscheibe 4 angeordnet ist. Der Laufring 3 ist vorzugsweise aus Gummi oder einem Kunststoff gefertigt, und weist eine gegen aussen ausgerichtete Lauffläche 3a auf, welche, wie in Figur 2 dargestellt, im mittleren Bereich vorzugsweise eine als Rollenrille 3b ausgestaltete Vertiefung aufweist, um ein an der Seilrolle 1 anliegendes Seil vorzugsweise zentriert zu führen. Die Seilrolle 1 umfasst zudem ein feststehendes Lagerteil 8 aufweisend eine Bohrung 10, und umfasst zudem zwei ringförmige Kugellager 6, 7, und umfasst beidseitig je eine Hülse 9, wobei diese Teile ein Seilrollenlager 13 bilden, über welches der Rollenkörper 2 drehbar um eine Drehachse 11 beziehungsweise an einem in Figur 4 dargestellten Bolzen 12 gelagert ist. Das Kugellager 6 ist in einer Seitenansicht dargestellt, wogegen das Kugellager 7 im Schnitt dargestellt ist.

Im dargestellten Ausführungsbeispiel umfasst der Rollenkörper 2 ein erstes Rollenkörperteil 2a, einen Verbindungssteg 2b sowie ein zweites Rollenkörperteil 2c, sodass der Rollenkörper eine erste Ausnehmung 2d sowie eine zweite Ausnehmung 2e aufweist. Diese Ausnehmungen 2d, 2e sind zur Aufnahme weiterer Komponenten der Seilrolle 1, beispielsweise Sensoren, Batterien usw. geeignet. Der dargestellte Rollenkörper 2 ist vorzugsweise einteilig bzw. einstückig ausgestaltet und ist vorzugsweise als ein Gussstück gefertigt. Der Rollenkörper 2 könnte auch als ein Hohlkörper aufweisend einen Innenhohlraum ausgestaltet sein, sodass die genannten weiteren Komponenten beispielsweise auch im Innenhohlraum des Rollenkörpers 2 oder an einer Aussenseite des Rollenkörpers 2 angeordnet sein könnten. Die erfindungsgemässe Seilrolle 1 umfasst zumindest einen Sensor 53 zum Erfassen einer Zustandsgrösse Z, ein Steuergerät 50 sowie eine Drahtlosübertragungsvorrichtung 56. Die Drahtlosübertragungsvorrichtung 56 ist drahtlos sowie signal- oder datenübertragend mit einer nicht dargestellten, übergeordneten Überwachungsvorrichtung 75 verbunden. Während des Betriebs der erfindungsgemässen Seilrolle 1 erfasst das Steuergerät 50 eine vom Sensor 53 gemessene Zustandsgrösse Z, wobei die Zustandsgrösse Z vorzugsweise kontinuierlich erfasst wird, falls die Zustandsgrösse Z beispielsweise die Temperatur des Laufrings 3 ist, beispielsweise jede Sekunde, und wobei das Steuergerät 50 die Zustandsgrösse Z oder ein davon abgeleiteter Zustandswert Zw über die Drahtlosübertragungsvorrichtung 56 an die Überwachungsvorrichtung 75 übermittelt. Die Seilrolle 1 umfasst zudem eine Energiequelle 51, welche zumindest zum Betrieb des Steuergerätes 50 sowie der Drahtlosübertragungsvorrichtung 56 erforderlich ist. Die Energiequelle 51 ist vorzugsweise als eine Batterie ausgestaltet. Besonders vorteilhaft ist die Energiequelle 51 als wieder aufladbare Batterie ausgestaltet, welche beispielsweise drahtlos über ein induktives Laden wieder aufgeladen werden kann. In einer weiteren möglichen Ausgestaltung kann die Seilrolle 1 einen Elektrogenerator umfassen, indem die Energiequelle 51 beispielsweise ein fest am Rohrstück 8 angeordnetes Permanentmagnet 51a sowie eine fest am Rollenkörper 2 angeordnete Spule 51b umfassen, wobei der Permanentmagnet 51a und die Spule 51b derart gegenseitig angeordnet sind, dass in der Spule eine Spannung induziert wird, welche als Energiequelle 51 dient, oder welche vorzugsweise zum Laden der Batterie der Energiequelle 51 verwendet wird. Da die Seilrolle 1 während des Betriebs der Luftseilbahnanlage über das anliegende Seil in Rotation versetzt wird, weist diese Ausführungsform den Vorteil auf, dass die Seilrolle 1 zumindest immer dann mit elektrischer Energie versorgt ist, solange das anliegende Seil bewegt wird. Vorzugsweise umfasst die Energiequelle 51 der Seilrolle 1 jedoch zudem eine Batterie, sodass das Steuergerät 50 und die Drahtlosübertragungsvorrichtung 56 auch bei Stillstand der Seilrolle 1 betreibbar ist. Als Energiequelle 51 ist beispielsweise auch ein Superkondensator, auch als Supercap oder als Ultracap bezeichnet, geeignet.

Die erfindungsgemässe Seilrolle 1 umfasst zumindest einen Sensor 53, und vorzugsweise eine Mehrzahl von Sensoren. Der Sensor 53 ist vorzugsweise als ein Kraftsensor zur Messung einer Kraft, oder als Sensor zur Messung einer Dehnung ausgestaltet. Die in den Figuren 1 bis 3 dargestellte Seilrolle 1 umfasst zumindest drei und vorzugsweise sechs Dehnmessstreifen, wobei, wie in Figur 1 dargestellt, drei Dehnmessstreifen 53c, 53d, 53e bezüglich der Drehachse 11 in radialer Richtung verlaufend am Verbindungssteg 2b des Rollenkörpers 2 befestigt sind, und in Umfangsrichtung gegenseitig gleichmässig beanstandet angeordnet sind. Die drei Dehnmesstreifen 53c, 53d, 53e können insbesondere eine Dehnung in einer Richtung radial zur Drehachse 11 erfassen. Es könnten zudem auch mehr als drei Dehnmesstreifen 53c, 53d, 53e angeordnet sein. Die Signale der drei Dehnmessstreifen 53c, 53d, 53e werden einer Dehnmessstreifenbrückenschaltung zugeleitet, welche Teil des Steuergerätes 50 ist. Vorzugsweise wird vom Steuergerät 50, beispielsweise mit Hilfe eines als Drehwinkelgeber ausgestalteten Sensors 53, zudem der Drehwinkel der Seilrolle 1 erfasst. Das Steuergerät 50 ist vorzugsweise derart ausgestaltet, dass von einer auf die Seilrolle 1 einwirkenden Kraft F sowohl deren Gesamtbetrag als auch deren Teilkräfte in zweidimensionaler Richtung, vorzugsweise unterteilt in eine Teilkraft in X-Richtung und eine Teilkraft in Y-Richtung messbar ist. Vorzugsweise umfasst die Seilrolle 13 zusätzliche Dehnmessstreifen 53f, 53g, 53h, welche, wie aus Figur 2 ersichtlich, auf der Rückseite des Verbindungssteges 2b, gegenüberliegend den Dehnmessstreifen 53c, 53d, 53e angeordnet sind. Diese Anordnung der Dehnmessstreifen 53f, 53g, 53h erlaubt, zusammen mit den Dehnmesstreifen 53c, 53d, 53e, eine Biegung des Verbindungsstegs 2b zu messen, was den Vorteil ergibt, dass von einer einwirkenden Kraft F nebst dem Gesamtbetrag auch deren Teilkräfte in dreidimensionaler Richtung, das heisst deren Teilkräfte in X-Richtung, in Y-Richtung sowie auch in Z-Richtung messbar sind, wobei die Z-Richtung vorzugsweise in Verlaufsrichtung der Drehachse 11 verläuft.

Im Ausführungsbeispiel gemäss der Figuren 1 bis 3 ist die Energiequelle 51, das Steuergerät 50 sowie eine Verbindungsleitung 55 zwischen dem Steuergerät 50 und der Energiequelle 51 in der zweiten Ausnehmung 2e des Rollenkörpers 2 angeordnet. Die Drahtlosübertragungsvorrichtung 56 ist in der ersten Ausnehmung 2d angeordnet. Zur besseren Signalübertragung kann die Drahtlosübertragungsvorrichtung 56 oder zumindest deren Antennen auch ausserhalb der ersten Ausnehmung 2d angeordnet sein. Vorzugsweise weist die Seilrolle 1 seitlich angeordnete Abdeckungen auf, welche die erste und zweite Ausnehmung 2d, 2e gegen Aussen verschliessen, vorzugsweise wasserdicht verschliessen.

Die erfindungsgemässe Seilrolle 1 kann anstelle der dargestellten Dehnmessstreifen oder zusätzlich zu den dargestellten Dehnmessstreifen weitere Sensoren 53 umfassen, beispielsweise ein Vibrationssensor 53i, welcher beispielsweise die Vibrationen des zweiten Rollenkörperteils 2c erfasst, oder beispielsweise, wie in Figur 3 dargestellt, zwei beidseitig in der Bordscheibe 4 angeordnete Näherungssensoren 53a, 53b, welche die Distanz zwischen Bordscheibe 4 und Seil 101 messen. Zudem kann die Berührung der Bordscheibe 4 durch das Seils 101 gemessen werden, indem mit einem entsprechenden Sensor 53 die Impedanz des Seils 101 gegenüber Erde bzw. Masse gemessen wird. Es kann sich zudem als vorteilhaft erweisen den Zustand des Laufrings 3 mit einem Sensor 53k zu erfassen, beispielsweise in dem unterhalb der Oberfläche des Laufrings 3 ein in Umfangsrichtung verlaufender Draht 53k eingelassen ist, der bei einem entsprechenden Verschleiss des Laufrings 3 unterbricht und somit nicht mehr durchgehend elektrisch leitend ist. Im Laufring 3 könnte beispielsweise auch ein Drucksensor 53m angeordnet sein, der in Verlaufsrichtung der Drehachse 11 die in radialer Richtung einwirkende Kraft an unterschiedlichen Positionen misst, und daraus vorzugsweise die Stellung des Seils 101 an der Lauffläche 3a in Z-Richtung bestimmbar ist, wobei der Sensor 53k oder 53m auch über induktive Schleifen verfügen könnte, welche die Stellung des Seils 101 erfassen können, um dadurch die Stellung des Seiles 101 im Verlaufsrichtung der Drehachse 11 zu erfassen. Es könnte auch zumindest ein Temperatursensor in der Seilrolle 1, beispielsweise am oder im Laufring 3 angeordnet sein, um die Temperatur der Seilrolle 1 zu erfassen. Besonders vorteilhaft ist als weiterer Sensor 53 ein GPS-Sensor 531 vorgesehen, mit welchen die genaue geografische Position der Seilrolle 1 erfasst werden kann.

Figur 4 zeigt eine Stirnansicht der Seilrolle 1 sowie im Schnitt eine Wippe 21 sowie einen Bolzen 12 mit Mutter 12a, wobei die Seilrolle 1 über den Bolzen 12 lösbar mit der Wippe 21 verbunden ist. Die erfindungsgemässe Seilrolle 1 weist den Vorteil auf, dass diese auf einfache Weise und daher sehr effizient und kostengünstig austauschbar ist. Da alle Sensoren 53 in der Seilrolle 1 integriert sind, sind beim Austausch der Seilrolle 1 keine weiteren Massnahmen wie zum Beispiel Einstellung und Anpassung von ausserhalb der Seilrolle 1 angeordneten Sensoren erforderlich. Zudem sind die innerhalb der Seilrolle 1 bzw. in der ersten und zweiten Ausnehmung 2e, 2e angeordneten Sensoren 53 vor Witterungseinflüssen und/oder Verschmutzung sehr gut geschützt, sodass diese Sensoren langfristig zuverlässig und wartungsfrei arbeiten.

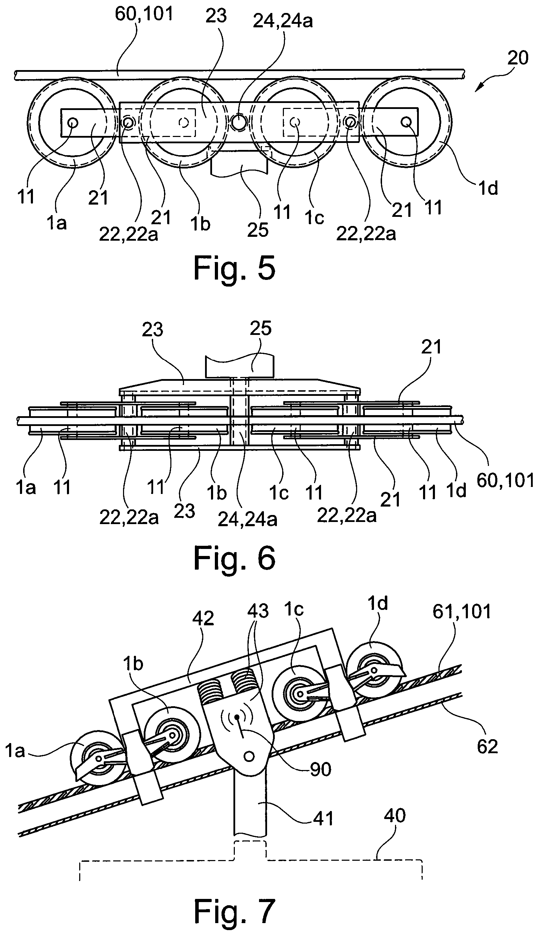

Figur 5 zeigt eine Seitenansicht und Figur 6 eine Draufsicht einer Rollenbatterie 20 einer Umlaufseilbahn. Die dargestellte Rollenbatterie 20 umfasst vier Seilrollen 1a, 1b, 1c, 1d, an welchen ein Förderseil 60 eine Sessel- oder Gondelbahn anliegt. Die Rollenbatterie 20 umfasst eine Hauptwippe 23 mit einem Hauptwippenlager 24 mit Hauptwippenlagerdrehachse 24a, und umfasst zwei Wippen 21 mit Wippenlager 22 und Wippenlagerdrehachse 22a, wobei an jeder Wippe 21 jeweils zwei Seilrollen 1 um jeweils eine Drehachse 11 drehbar gelagert ist. Das Hauptwippenlager 24 ist von einer Stütze bzw. einem Tragmasten 25 gehalten. Zumindest eine der Seilrollen 1a, 1b, 1c, 1d der Rollenbatterie 20 ist als erfindungsgemässe Seilrolle 1 umfassend einen Sensor 53, ein Steuergerät 50 sowie eine Drahtlossignalübertragungsvorrichtung 56 ausgestaltet. In einer weiteren vorteilhaften Ausgestaltung ist, in Verlaufsrichtung des Förderseils 60, zumindest die erste und die letzte Seilrolle 1a, 1d entsprechend der erfindungsgemässen Seilrolle 1 ausgestaltet.

Figur 7 zeigt in einer Seitenansicht ein Fahrwerk 42 einer Seilbahnkabine 40, wobei das Fahrwerk 42 vier als Laufrollen verwendete Seilrollen 1a, 1b, 1c, 1d sowie ein Verbindungsmittel 43 umfasst, wobei die Seilbahnkabine 40 über eine Tragstange 41 drehbar mit dem Verbindungsmittel 43 verbunden ist. Die Seilrollen 1a, 1b, 1c, 1d liegen auf einem Tragseil 61 auf und das Fahrwerk 42 ist fest mit einem Zugseil 62 verbunden. Zumindest eine der Seilrollen 1a, 1b, 1c, 1d ist entsprechend der erfindungsgemässen Seilrolle 1 ausgestaltet. Die Seilbahnkabine 40 umfasst vorzugsweise eine Sende- und Empfangsvorrichtung 90, welche drahtlos und datenübertragend mit den Seilrollen 1a, 1b, 1c, 1d in Verbindung steht. Die Seilbahnkabine 40 übermittelt den Datenverkehr vorzugsweise an die Überwachungsvorrichtung 75, über nicht näher dargestellte Kommunikationsmittel. Die Sende- und Empfangsvorrichtung 90 der Seilbahnkabine 40 kann auch verwendet werden, um einen Datenaustausch zwischen der Seilbahnkabine 40 und an Tragmasten angeordneten Seilrollen 101 zu ermöglichen, indem beispielsweise während der Vorbeifahrt der Seilbahnkabine 40 Daten mit der Seilrolle 101 ausgetauscht werden. Vorzugsweise umfasst die Seilrolle 101 einen Speicher mit vergangenen, gemessenen Zustandswerten Z oder Zustandsgrösse Zw, wobei es während der Durchfahrt bzw. der Vorbeifahrt der Seilbahnkabine 40 beispielsweise auch möglich ist, der Seilbahnkabine 40 diese vergangenen Daten zu übermitteln, sodass letztendlich eine Auswahl oder auch alle von einer Seilrolle 101 gemessenen Zustandswerte Z oder Zustandsgrössen Zw von der Seilbahnkabine 40 an die Überwachungsvorrichtung 75 übertragbar sind bzw. übermittelt werden können. Ein solches batchweises Einsammeln der von Seilrollen 101 gemessenen Zustandswerten Z oder Zustandsgrössen Zw mit Hilfe eines vorbeifahrenden Fahrbetriebsmittels einer Luftseilbahnanlange weist den Vorteil auf, dass die Daten zuverlässig übertragbar sind, da zwischen der drahtlosen Signalübertragungsvorrichtung 56 der Seilrolle 1 und der Sende- und Empfangsvorrichtung 90 des Fahrbetriebsmittels während der Vorbeifahrt keine grossen Distanzen zu überwinden sind. Somit ist kein kostenaufwändiges Netzwerk zur Datenübertragung erforderlich.

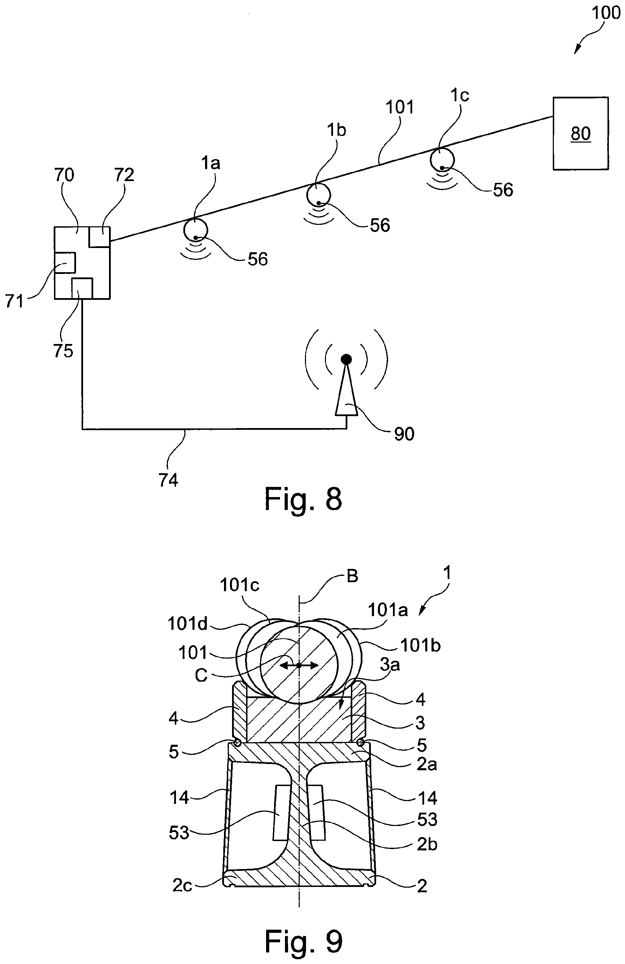

Figur 8 zeigt schematisch eine Luftseilbahnanlage 100 umfassend eine Antriebsstation 70, eine Gegenstation 80 und ein dazwischen verlaufendes Förderseil 60, 101. Die Luftseilbahnanlage 100 umfasst eine Mehrzahl der erfindungsgemässen Seilrollen 1a, 1b, 1c, welche unter anderem jeweils eine Drahtlossignalübertragungsvorrichtung 56 umfassen. Die Tragmasten 25, die Rollenbatterien 20 und weitere vorhandene Seilrollen 1 sind nicht im Detail dargestellt. Die Luftseilbahnanlage 100 übermittelt die Daten der Seilrollen 1a, 1b, 1c an eine Sende- und Empfangsvorrichtung 90, welche beispielsweise Teil eines digitalen GSM Mobilfunknetzes ist. Es könnte auch an zumindest einigen der Tragmasten eine Sende- und Empfangsvorrichtung 90 angeordnet sein, wobei die auf dem Tragmasten angeordnete Sende- und Empfangsvorrichtung 90 beispielsweise über ein Kabel mit der Überwachungsvorrichtung 75 verbunden ist. Somit ist die drahtlose Übertragungsdistanz sehr kurz, und es könnten energiesparsame Übertragungsmethoden wie WLAN verwendet werden. Die übermittelten Daten werden über eine Signal- oder Datenleitung 74 einer Überwachungsvorrichtung 75 zugeleitet. Die Antriebstation 70 umfasst eine Hauptsteuerungsvorrichtung 71 welche unter anderem den Antrieb 72 zum Antrieb des Förderseils 60 ansteuert. Die Überwachungsvorrichtung 75 tauscht Daten mit der Hauptsteuerungsvorrichtung 71 aus.

Die in Figur 8 dargestellte Überwachungsvorrichtung 75 kann über entsprechende Sende- und Empfangsvorrichtungen 90 auch Daten zwischen weiteren Luftseilbahnanlagen 100 austauschen, sodass die Überwachungsvorrichtung 75 auch eine Mehrzahl von Luftseilbahnanlagen 100 überwachen kann.

Das Verfahren zum Betrieb einer Luftseilbahnanlage 100 umfassend ein Förder-, Zug- oder Tragseil 101 sowie eine Mehrzahl von Seilrollen 1, wobei das Seil 101 an zumindest einigen der Seilrollen 1 anliegt und dies antreibt erfolgt derart, dass zumindest eine der Seilrollen 1 einen Sensor 53 umfasst, mit welchem eine Zustandsgrösse Z der Seilrolle 1 erfasst wird, dass die Zustandsgrösse Z oder ein davon abgeleiteter Zustandswert Zw drahtlos von der Seilrolle 1 an eine Überwachungsvorrichtung 75 übermittelt wird, und dass die Luftseilbahnanlage 100 in Abhängigkeit der Zustandsgrösse Z oder des Zustandswerts Z_{W} überwacht wird.

Vorteilhafterweise wird zumindest eine auf die Seilrolle 1 einwirkende Kraft als Zustandsgrösse Z erfasst.

Die Seilrolle 1 weist eine Drehachse 11 auf, wobei besonders vorteilhaft derartige Zustandsgrössen Z erfasst werden, zum Beispiel mit Dehnmessstreifen, dass eine auf die Seilrolle 1 einwirkende Kraft, vorzugsweise in Verlaufsrichtung der Drehachse 11 auf die Seilrolle 1 einwirkende Kraft, bzw. eine Querkraft als Zustandswert Zw ermittelt wird. Somit können beispielsweise auch durch Winde verursachte, auf die Seilrolle wirkende Querkräfte, oder auf eine Rollenbatterie wirkende Querkräfte beziehungsweise Drehmomente gemessen werden. Die Zustandsgrössen Z können während dem Betrieb der Luftseilbahnanlage 100 als auch bei deren Stillstand gemessen werden, und insbesondere auch, wenn die Luftseilbahnanlange 100 ausser Betrieb ist. Somit ist es beispielsweise möglich die durch Winde verursachten Kräfte beispielsweise auch nachts zu messen, wenn die Luftseilbahnanlage 100 ausser Betrieb ist.

Die Seilrolle 1 umfasst vorzugsweise ein Steuergerät 50, wobei die Überwachungsvorrichtung dem Steuergerät in einer vorteilhaften Ausgestaltung eine Sollgrösse für die Zustandsgrösse Z beziehungsweise den Zustandswerts Z_{W} vorgibt, und wobei die Zustandsgrösse beziehungsweise der Zustandswert Z_{W} nur dann von der Seilrolle an die Überwachungsvorrichtung 75 übermittelt wird, wenn die Zustandsgrösse beziehungsweise der Zustandswert Zw von der Sollgrösse abweicht. Als Sollgrösse kann zum Beispiel eine Sollquerkraft oder eine Solltemperatur vorgegeben werden, wobei das Steuergerät 50 die Zustandsgrösse beziehungsweise den Zustandswert Zw nur dann der Überwachungsvorrichtung 75 übermittelt, wenn die gemessene Zustandsgrösse beziehungsweise der Zustandswert Zw von der Sollgrösse abweicht oder beispielsweise die überschreitet.

Zumindest eine Seilrolle 1 und vorzugsweise mehrere Seilrollen können einen Beschleunigungssensor 53 umfassen. Die gemessene Zustandsgrösse Z kann beispielsweise verwendet werden, um mechanische Eigenschaften der Seilrolle 1, beispielsweise den Zustand des ringförmigen Lagers 6,7 zu überwachen. Zudem kann auf Grund der Zustandsgrösse Z von mehreren, auf einer gemeinsamen Rollenbatterie angeordneten Seilrollen mechanische Eigenschaften der Rollenbatterie bestimmt werden.

Vorteilhafterwiese umfasse zumindest einige der Seilrollen je einen GPS-Sensor zum Erfassen der jeweiligen Seilrollenposition umfassen, wobei die Seilrollenpositionen der Überwachungsvorrichtung 75 übermittelt werden.

Als Zustandsgrösse wird beispielsweise die Drehzahl der Seilrolle 1 gemessen. Die Drehzahl beziehungsweise die Drehgeschwindigkeit einer Seilrolle kann zum Beispiel über einen einzigen der Dehnmessstreifen 53c, 53d, 53e erfasst werden, indem beim wiederkehrenden Messsignal der höchste Wert erfasst wird, welcher der Position der Seilrolle mit der höchsten einwirkenden Kraft entspricht. Da der Dehnmessstreife 53c mit der Seilrolle 1 mit dreht, tritt die grösste Kraft an derjenigen Stelle auf, an welcher das Tragseil 101 an der Seilrolle 1 anliegt und der Dehnmessstreifen 53c zum Tragseil 101 hin ausgerichtet ist. Aus der Periodendauer dieses Messsignals mit höchstem Wert kann die Drehzahl der Seilrolle berechnet werden.

In einem vorteilhaften Verfahren kann aus der gemessenen Drehzahl somit, bei bekanntem Aussendurchmesser des Laufrings 3, die Differenz zwischen der Umfangsgeschwindigkeit der Rollenrille 3b bzw. der Lauffläche 3a der Seilrolle 1 und der Bewegungsgeschwindigkeit des Seils 101 berechnet werden, auch als Schlupf bezeichnet, indem die der Antriebsstation 70 bekannte Geschwindigkeit des Seils 101 mit der Umfangsgeschwindigkeit einer jeweiligen Seilrolle 1 verglichen wird, sodass für die jeweilige Seilrolle 1 der aktuelle Schlupf berechnet werden kann.

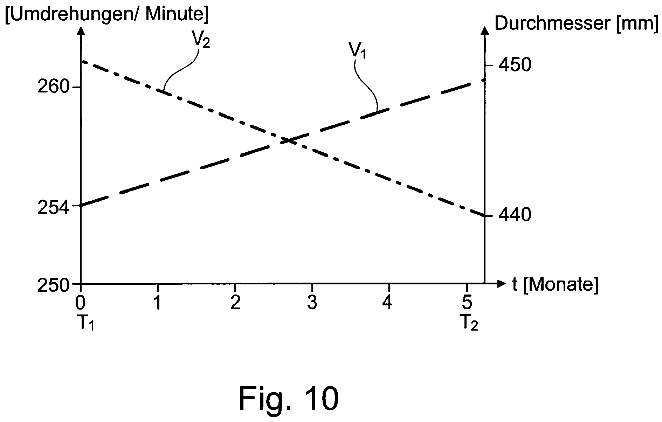

In einem vorteilhaften Verfahren kann aus der gemessenen Drehzahl, falls kein Schlupf vorhanden ist, eine Durchmesseränderung des Laufrings 3 berechnet werden, das heisst aus der gemessenen Zustandsgrösse Z wird ein daraus abgeleiteter Zustandswert Z_{W} berechnet, indem die Drehzahl zu einem ersten Zeitpunkt T1 gemessen wird, indem die Drehzahl zu einem zweiten Zeitpunkt T2 gemessen wird, wobei zwischen den beiden Zeitpunkten T1, T2 ein vorzugsweise relativ grosser Zeitabschnitt von beispielweise zumindest einem Monat liegt, und indem aus der Differenz der Drehzahl die Reduktion des Durchmessers der Lauffläche 3a des Laufrings 3 berechnet wird. Figur 10 zeigt an Hand eines Beispiels den Verlauf V1 der Drehzahl (Drehzahl pro Minute) einer Seilrolle 1 in Funktion der Zeit (in Monaten), und zeigt zudem den Verlauf V2 des Durchmessers des Laufrings 3 in Funktion der Zeit.

Der Verlauf V2 bzw. die Berechnung der Abnutzung des Laufrings 3 einer Seilrolle 1 wird an Hand vom Beispiel gemäss Figur 10 näher erläutert. Angenommen die Geschwindigkeit des Seils 101 beträgt 6 m/s. Der Laufring 3 weist im Neuzustand, zum Zeitpunkt T1 einen Durchmesser von 450 mm auf. Die Seilrolle 1 weist somit ohne Schlupf eine Drehzahl von etwa 254 Umdrehungen pro Minute auf, genau genommen 60 * 6 /(π*0,45) = 254,6 Umdrehungen /Minute. Angenommen die Seilrolle weist ohne Schlupf zum zweiten Zeitpunkt T2, nach 5 Monaten, eine Drehzahl vom 260 Umdrehungen pro Minute auf, so kann daraus berechnet werden, dass sich der Radius des Laufrings 3 um 5 mm reduziert hat, beziehungsweise dass sich der Durchmesser des Laufrings 3 von 450 mm auf 440 mm reduziert hat, genau genommen 60*6/(260*π) = 440,7mm. Vorteilhafterweise wird der Durchmesser jedes Laufrings 3 der erfindungsgemässen Seilrolle 1 in vorzugsweise regelmässigen Zeitabständen, beispielsweise einmal pro Tag oder einmal pro Woche überwacht. Vorzugsweise wird für jede einzelne Seilrolle 1, wie in Figur 10 dargestellt, die gemessene Drehzahl beziehungsweise der daraus berechnete Durchmesser des Laufrings in Funktion der Zeit gespeichert, beispielsweise über ein Jahr. Aus dem Verlauf des Durchmessers in Funktion der Zeit ist, wie in Figur 10 dargestellt, zum Beispiel der Zustand des Laufrings 3 der individuellen Seilrolle 1 erkennbar, es ist abschätzbar, wann dieser Laufring 3 ersetzt werden muss, oder, falls der Verlauf des Durchmessers in Funktion der Zeit eine ungewöhnliche Veränderung aufweisen sollte, ist erkennbar, dass sich der Laufring 3 aus irgendeinem Grunde ungewöhnlich schnell verändert hat, sodass dieser Laufring 3 beispielsweise intensiver überwacht wird oder ersetzt wird. Vorzugsweise werden für zumindest einige und vorteilhafterweise für alle Seilrollen 1 die gemessenen Zustandgrössen Z und/oder die davon abgeleiteten Zustandswerte Zw während einer Zeitdauer gespeichert, um für jede entsprechende Seilrolle 1 die Entwicklung der gemessenen Zustandgrössen Z und/oder die davon abgeleiteten Zustandswerte Zw zu überprüfen verfügbar zu haben.

Für alle gemessenen Zustandsgrössen und daraus abgeleiteten Zustandswerte kann eine derartige, wie vorhin beschriebene Langzeitüberwachung erfolgen, indem die gemessen Zustandsgrössen und/oder davon abgeleitete Zustandswerte nach gewissen Zeitabständen verglichen werden und eine Veränderung dieser Werte untersucht und beurteilt wird.

In einem vorteilhaften Verfahren kann, insbesondere bei einer neuen Seilrolle 1, aus der gemessenen Drehzahl, falls kein Schlupf vorhanden ist, die Lage des Seils 1 auf der Lauffläche 3b berechnet werden. Auf Grund der Wölbung der Lauffläche 3a, wie in Figur 3 dargestellt, ändert sich bei konstanter Geschwindigkeit des Seils 101 die Drehzahl der Seilrolle 1 in Abhängigkeit der Stellung des Seils 101 auf der Lauffläche 3a. Somit kann berechnet werden, wieweit nach links oder rechts sich das Seil 101 auf der Lauffläche 3a verschoben hat. Falls sich das Seil 101 entlang der Lauffläche 3a in Bewegungsrichtung C hin und her bewegt, wie in Figur 9 dargestellt, so wird dies, bei konstanter Geschwindigkeit des Seils 101, Schwankungen der Winkelgeschwindigkeit der Seilrolle 1 verursachen. Daraus kann beispielsweise der kleinste und der grösste Radius der Lauffläche 3a berechnet bzw. abgeschätzt werden. Um eine derartige Veränderung der Winkelgeschwindigkeit der Seilrolle 1 zu messen ist es erforderlich, eine Zustandsgrösse, wie den Drehwinkel der Seilrolle 1, mehrmals während einer Umdrehung der Seilrolle 1 zu erfassen.

Besonders vorteilhaft ist die erfindungsgemässe Seilrolle 1 an einem Tragmasten 25 beziehungsweise an einer vom Tragmasten 25 gehaltenen Rollenbatterie 20 angeordnet, sodass in einem vorteilhaften Verfahren die Zustandsgrösse Z einer an einem Tragmasten 25 bzw. an der Rollenbatterie 20 des Tragmasten 25 angeordneten Seilrolle 1 gemessen wird.

In einem vorteilhaften Verfahren wird die Seilrolle 1 vom Seil 101 angetrieben und in Rotation versetzt, wobei die Zustandsgrösse Z bei rotierender Seilrolle 1 erfasst wird.

In einem weiteren vorteilhaften Verfahren wird die Seilrolle 1 im Stillstand gehalten, weil das an der Seilrolle 1 anliegende Seil 101 stillsteht, sodass die Zustandsgrösse Z bei stillstehender Seilrolle 1 erfasst wird.

In einem vorteilhaften Verfahren wird die Zustandsgrösse Z beziehungsweise der davon abgeleitete Zustandswert Zw zu einem ersten Zeitpunkt T1 und einem zweiten Zeitpunkt T2 gemessen werden, wobei die Veränderung der Zustandsgrösse Z beziehungsweise der davon abgeleitete Zustandswert Zw in Funktion der Zeit überwacht wird.

In einem vorteilhaften Verfahren beträgt die Zeitdifferenz zwischen dem erstem und dem zweitem Zeitpunkt T1, T2 zumindest eine Woche und vorzugsweise einen Monat, wobei der abgeleitete Zustandswert Zw zumindest eine der nachfolgenden Werte umfasst, Abnutzung der Seilrolle 1, Reduktion des Durchmessers eines Laufrings 3 der Seilrolle 1, Setzung eines Trägers 25.

In einem vorteilhaften Verfahren fährt ein Fahrbetriebsmittel der Luftseilbahnanlage 100 über die Seilrolle 1, wobei die Zustandsgrösse Z zumindest beim Überfahren der Seilrolle 1 gemessen wird, wobei die Seilrolle 1 beim Überfahren zu zusätzlichen Schwingungen angeregt wird, welche als Zustandsgrösse Z gemessen werden und deren Auswertung einen Hinweis auf den Zustand der Seilrolle 1 geben kann.

Vorteilhafterweise umfasst die Seilrolle 1 einen Rollenkörper 2 mit einer Drehachse 11, wobei der Rollenkörper 2 ein erstes Rollenkörperteil 2a und ein zweites Rollenkörperteil 2c umfasst, wobei das erste und das zweite Rollenkörperteil 2a,2c einen unterschiedlichen Durchmesser aufweisen, wobei das erste und das zweite Rollenkörperteil 2a,2c über einen Verbindungssteg 2b miteinander verbunden sind, und wobei der Sensor 53 als Zustandsgrösse Z Eigenschaften des Verbindungsstegs 2b erfasst, wobei der Sensor 53 insbesondere mit dem Verbindungssteg 2b verbunden ist.

Die erfindungsgemässe Seilrolle beziehungsweise die erfindungsgemässe Luftseilbahnanlage erlaubt somit auf einfache und kostengünstige Weise die Überwachung einer Vielzahl von Parametern der Luftseilbahnanlage, und ermöglichst auch eine Ansteuerung der Luftseilbahnanlage in Abhängigkeit der gemessenen Parametern, beispielsweise indem die Fahrgeschwindigkeit der Luftseilbahnkabine reduziert wird, wenn die Querkräfte an der Seilrolle eines Tragmasten, üblicherweise verursacht durch angreifende Seitenwinde, eine vorgegebenen Schwellenwert überschreiten.

Figur 9 zeigt einen Schnitt durch ein weiteres Ausführungsbeispiel einer Seilrolle 1, wobei, gleich wie in Figur 3, die obere Hälfte der Seilrolle 1 dargestellt ist, ohne Darstellung des Lagers 13. Im Unterschied zum Ausführungsbeispiel gemäss Figur 3 ist der Rollenkörper 2 symmetrisch bezüglich einer senkrecht zur Drehachse 11 verlaufenden Ebene B ausgestaltet, sodass auch das erste Rollenkörperteil 2a, der Verbindungssteg 2b und das zweite Rollenkörperteil 2c symmetrisch bezüglich der Ebene B verlaufen. Der Rollenkörper 2 weist im Wesentlichen einen Doppel-T-förmigen Querschnitt auf, mit einem senkrecht zur Drehachse 11 verlaufenden Verbindungssteg 2b. Die Seilrolle 1 umfasst, wie bereits in Figur 3 dargestellt, einen Laufring 3, zwei Bordscheiben 4 sowie zwei Sicherungsringe 5. Zwei Sensoren 53, zur Messung einer Kraft oder einer Längenänderung des Verbindungsstegs 2b, sind an diesem befestigt und vorzugsweise gegenseitig symmetrisch bezüglich der Ebene B angeordnet. Vorzugsweise sind links und rechts je drei Sensoren 53 in Umfangsrichtung gegenseitig regelmässig beabstandet angeordnet, wie in Figur 1 dargestellt. Die Seilrolle 1 umfasst vorzugsweise zudem eine Seitenabdeckung 14, welche vorzugsweise bezüglich der Drehachse 11 entlang der gesamten Umfangrichtung zwischen dem ersten Rollenkörperteil 2a und dem zweiten Rollenkörperteil 2c angeordnet ist und an beiden Teilen anliegt, sodass innerhalb der Seilrolle 1 ein oder zwei Innenräume 15 ausgebildet sind. Diese Innenräume 15 sind gegen Aussen vorzugsweise staubdicht und/oder wasserdicht. Das Seil 101 liegt an der Oberfläche des Laufrings 3 auf, wobei sich das Seil 101 auf dieser Oberfläche in Bewegungsrichtung C hin und her bewegen kann, abhängig beispielsweise von am Seil 101 angreifenden Kräften, beispielsweise von an der Seilbahnkabine 40 angreifenden Kräften, oder beispielsweise abhängig von der Abnutzung der dem Seil 101 zugewandten Oberfläche des Laufrings 3. Figur 9 zeigt beispielhaft mögliche Seillagen 101a, 101b, 101c, 101d. Diese Seillagen sind vorzugsweise mit einer Seilrolle 1 umfassend, wie oben beschrieben, sechs Sensoren 53 bestimmbar, indem aus den gemessenen Zustandswerte Z ein daraus abgeleiteter Zustandswert Zw berechnet wird, welcher die Seillage senkrecht zur Ebene B bzw. in Bewegungsrichtung C angibt.

## Patentansprüche

1. Luftseilbahnanlage (100) umfassend eine Überwachungsvorrichtung (75), ein Förder-, Zug- oder Tragseil (101) sowie eine Mehrzahl von Seilrollen (1), wobei zumindest einige der Seilrollen (1) am Seil (101) anliegen, sowie umfassend einen Sensor (53) zum Erfassen einer Zustandsgrösse (Z), ein Steuergerät (50), eine elektrische Energiequelle (51) sowie eine Drahtlosübertragungsvorrichtung (56), wobei der Sensor (53) über das Steuergerät (50) und die Drahtlosübertragungsvorrichtung (56) signal- oder datenübertragend mit der Überwachungsvorrichtung (75) verbunden ist, **dadurch gekennzeichnet, dass** zumindest eine der Seilrollen (1) den Sensor (53), das Steuergerät (50), die elektrische Energiequelle (51) sowie die Drahtlosübertragungsvorrichtung (56) umfasst.

2. Luftseilbahnanlage nach Anspruch 1, **dadurch gekennzeichnet, dass** die Seilrolle (1) eine an einem Tragmasten angeordnete Tragrolle oder Niederhalterolle ist.

3. Luftseilbahnanlage nach Anspruch 1 oder 2, **dadurch gekennzeichnet, dass** die Seilrolle (1) als Sensor (53) zumindest einen Dehnmessstreifen (53c, 53d, 53e) oder einen Kraftsensor umfasst, zum Erfassen einer Dehnung der Seilrolle (1) bzw. zum Erfassen einer an der Seilrolle (1) anliegenden Kraft.

4. Luftseilbahnanlage nach Anspruch 3, **dadurch gekennzeichnet, dass** der Sensor (53) zumindest ein und vorzugsweise zumindest drei Dehnmessstreifen (53c, 53d, 53e) umfasst, die bezüglich einer Drehachse (11) der Seilrolle (1) eine in radialer Richtung erfolgende Dehnung erfassen.

5. Luftseilbahnanlage nach einem der vorhergehenden Ansprüche, **dadurch gekennzeichnet, dass** die Seilrolle (1) als Sensor (53) einen GPS-Sensor zur Positionserfassung umfasst.

6. Luftseilbahnanlage nach einem der vorhergehenden Ansprüche, **dadurch gekennzeichnet, dass** eine Rollenbatterie (20) eine Mehrzahl von Seilrollen (1) umfasst, und dass zumindest zwei der Seilrollen (1) der Rollenbatterie (20) je einen Sensor (53), ein Steuergerät (50) sowie eine Drahtlosübertragungsvorrichtung (56) umfassen.

7. Verfahren zum Betrieb einer Luftseilbahnanlage (100) umfassend ein Förder-, Zug- oder Tragseil (101) sowie eine Mehrzahl von Seilrollen (1), wobei das Seil (101) an zumindest einigen der Seilrollen (1) anliegt und dabei vom anliegenden Seil (101) eine Kraft auf die jeweilige Seilrolle (1) übertragen wird, **dadurch gekennzeichnet, dass** eine Zustandsgrösse (Z) der Seilrolle (1) mittels eines an der Seilrolle (1) angeordneten Sensors (53) erfasst wird, dass die Zustandsgrösse (Z) oder ein davon abgeleiteter Zustandswert (Zw) drahtlos von der Seilrolle (1) an eine Überwachungsvorrichtung (75) übermittelt wird, und dass die Luftseilbahnanlage (100) in Abhängigkeit der Zustandsgrösse (Z) oder des Zustandswerts (Zw) überwacht wird.

8. Verfahren nach Anspruch 7, **dadurch gekennzeichnet, dass** eine auf die Seilrolle (1) einwirkende Kraft als Zustandsgrösse (Z) erfasst wird.

9. Verfahren nach Anspruch 7 oder 8, **dadurch gekennzeichnet, dass** die Zustandsgrösse (Z) einer an einem Tragmasten (25) angeordneten Seilrolle (1) bei still stehendem Förder-, Zug- oder Tragseil (101) gemessen wird.

10. Verfahren nach einem der Ansprüche 7 bis 9, **dadurch gekennzeichnet, dass** die Seilrolle (1) eine Drehachse (11) aufweist, und dass eine in Verlaufsrichtung der Drehachse (11) auf die Seilrolle (1) einwirkende Kraft bzw. eine quer zum Verlaufsrichtung des Seils (101) einwirkende Kraft als Zustandsgrösse (Z) erfasst wird.

11. Verfahren nach einem der Ansprüche 6 bis 9, **dadurch gekennzeichnet, dass** die Seilrolle (1) ein Steuergerät (50) umfasst, dass die Überwachungsvorrichtung (75) dem Steuergerät (50) eine Sollgrösse für die Zustandsgrösse (Z) beziehungsweise dem davon abgeleiteten Zustandswert (Zw) vorgibt, und dass die Zustandsgrösse (Z) beziehungsweise der davon abgeleitete Zustandswert (Zw) nur dann von der Seilrolle (1) an die Überwachungsvorrichtung (75) übermittelt wird, wenn die Zustandsgrösse (Z) beziehungsweise dem davon abgeleiteten Zustandswert (Z_{W}) von der Sollgrösse abweicht.

12. Verfahren nach einem die Ansprüche 7 bis 11, **dadurch gekennzeichnet, dass** eine Rollenbatterie (20) eine Mehrzahl von Seilrollen (1) mit je einem Sensor (53) umfasst, wobei jeder der Sensoren (53) als Zustandsgrösse (Z) zumindest eine Beschleunigung in zumindest einer Dimension und vorzugsweise in drei Dimensionen misst, und wobei die Überwachungsvorrichtung (75) aus diesen gemessenen Zustandsgrössen (Z) mechanische Eigenschaften der Rollenbatterie (20) bestimmt.

13. Verfahren nach einem der Ansprüche 7 bis 12, **dadurch gekennzeichnet, dass** zumindest einige der Seilrollen (1) je einen GPS-Sensor (57) zum Erfassen der jeweiligen Seilrollenposition (S₁, S₂, S₃) umfassen, und dass die Seilrollenpositionen (S₁, S₂, S₃) der Überwachungsvorrichtung (75) übermittelt werden.

14. Seilrolle (1) für eine Luftseilbahnanlage (100), wobei die Seilrolle (1) eine Lauffläche (3a) für ein Förder-, Zug- oder Tragseil (101) umfasst, **dadurch gekennzeichnet, dass** die Seilrolle (1) einen Sensor (53) zum Erfassen einer Zustandsgrösse (Z), ein Steuergerät (50), eine elektrische Energiequelle (51) sowie eine Drahtlosübertragungsvorrichtung (56) umfasst, und dass der Sensor (53) über das Steuergerät (50) und die Drahtlosübertragungsvorrichtung (56) signal- oder datenübertragend mit einer übergeordneten Überwachungsvorrichtung (75) verbindbar ist.

15. Seilrolle (1) nach Anspruch 14, **dadurch gekennzeichnet, dass** die Seilrolle (1) zumindest einen Dehnmessstreifen (53c, 53d, 53e) oder einen Kraftsensor (53) umfasst, zum Erfassen einer auf die Seilrolle (1) einwirkenden Kraft.

16. Seilrolle (1) nach einem der Ansprüche 14 bis 15, **dadurch gekennzeichnet, dass** die Seilrolle (1) einen Rollenkörper (2) mit einer Drehachse (11), sowie mit einem ersten Rollenkörperteil (2a) und einem zweitens Rollenkörperteil (2c) umfasst, wobei das erste und das zweite Rollenkörperteil (2a,2c) einen unterschiedlichen Durchmesser aufweisen, wobei das erste und das zweite Rollenkörperteil (2a,2c) über einen Verbindungssteg (2b) miteinander verbunden sind, und wobei der Sensor (53) als Zustandsgrösse (Z) Eigenschaften des Verbindungsstegs (2b) erfasst, wobei der Sensor (53) insbesondere mit dem Verbindungssteg (2b) verbunden ist.

## Claims

1. Aerial cableway installation (100) comprising a monitoring device (75), a hauling, traction or carrying cable (101) and a plurality of cable pulleys (1), at least some of the cable pulleys (1) bearing against the cable (101), and comprising a sensor (53) for detecting a state variable (Z), a control unit (50), an electrical power source (51) and a wireless transmission device (56), the sensor (53) being connected to the monitoring device (75) via the control unit (50) and the wireless transmission device (56) in such a way as to transmit signals or data, **characterized in that** at least one of the cable pulleys (1) comprises the sensor (53), the control unit (50), the electrical power source (51) and the wireless transmission device (56).

2. Aerial cableway installation according to claim 1, **characterized in that** the cable pulley (1) is a support pulley or hold-down pulley arranged on a support mast.

3. Aerial cableway installation according to claim 1 or 2, **characterized in that** the cable pulley (1) comprises as a sensor (53) at least one strain gauge (53c, 53d, 53e) or a force sensor, for detecting an elongation of the cable pulley (1) or for detecting a force applied to the cable pulley (1).

4. Aerial cableway installation according to claim 3, **characterized in that** the sensor (53) comprises at least one and preferably at least three strain gauges (53c, 53d, 53e), which detect an elongation occurring in the radial direction with respect to a rotation axis (11) of the cable pulley (1).

5. Aerial cableway installation according to one of the preceding claims, **characterized in that** the cable pulley (1) comprises as a sensor (53) a GPS sensor for position detection.

6. Aerial cableway installation according to one of the preceding claims, **characterized in that** a pulley battery (20) comprises a plurality of cable pulleys (1), and that at least two of the cable pulleys (1) of the pulley battery (20) each comprise a sensor (53), a control unit (50), and a wireless transmission device (56).

7. Method for operating an aerial cableway installation (100) comprising a hauling, traction or carrying cable (101) and a plurality of cable pulleys (1), the cable (101) bearing against at least some of the cable pulleys (1) and a force being transmitted to the respective cable pulley (1) by the bearing cable (101), **characterized in in that** a state variable (Z) of the cable pulley (1) is detected by means of a sensor (53) arranged on the cable pulley (1), **in that** the state variable (Z) or a state value (ZW) derived therefrom is transmitted wirelessly from the cable pulley (1) to a monitoring device (75), and **in that** the aerial cableway installation (100) is monitored as a function of the state variable (Z) or the state value (ZW).

8. Method according to claim 7, **characterized in that** a force acting on the cable pulley (1) is detected as a state variable (Z).

9. Method according to claim 7 or 8, **characterized in that** the state variable (Z) of a cable pulley (1) arranged on a support mast (25) is measured when the hauling, traction or carrying cable (101) is stationary.

10. Method according to one of the claims 7 to 9, **characterized in that** the cable pulley (1) has a rotation axis (11), and that a force acting on the cable pulley (1) in the direction of the rotation axis (11) or a force acting transversely to the direction of travel of the cable (101) is detected as a state variable (Z).

11. Method according to one of claims 6 to 9, **characterized in that** the cable pulley (1) comprises a control unit (50), **in that** the monitoring device (75) specifies to the control unit (50) a desired variable for the state variable (Z) or the state value (ZW) derived therefrom and **in that** the state variable (Z) or the state value (ZW) derived therefrom is transmitted from the cable pulley (1) to the monitoring device (75) if the state variable (Z) or the state value (ZW) derived therefrom deviates from the desired variable.

12. Method according to one of claims 7 to 11, **characterized in that** a pulley battery (20) comprises a plurality of cable pulleys (1) each having a sensor (53), each of the sensors (53) measuring as a state variable (Z) at least one acceleration in at least one dimension and preferably in three dimensions, and the monitoring device (75) determining mechanical characteristics of the pulley battery (20) from these measured state variables (Z).

13. Method according to any one of claims 7 to 12, **characterized in that** at least some of the cable pulleys (1) each comprise a GPS sensor (57) for detecting the respective cable pulley position (S1, S2, S3), and **in that** the cable pulley positions (S1, S2, S3) are transmitted to the monitoring device (75).

14. Cable pulley (1) for an Aerial cableway installation (100), wherein the cable pulley (1) comprises a thread (3a) for a hauling, traction or carrying cable (101), **characterized in that** the cable pulley (1) comprises a sensor (53) for detecting a state variable (Z), a control unit (50) an electrical power source (51) and a wireless transmission device (56), and **in that** the sensor (53) can be connected via the control unit (50) and the wireless transmission device (56) in a signal- or data-transmitting manner to a higher-level monitoring device (75).

15. Cable pulley (1) according to claim 14, **characterized in that** the cable pulley (1) comprises at least one strain gauge (53c, 53d, 53e) or a force sensor (53), for detecting a force acting on the cable pulley (1).

16. Cable pulley (1) according to any one of claims 14 to 15, **characterized in that** the cable pulley (1) comprises a pulley body (2) having a rotation axis (11), and having a first pulley body part (2a) and a second pulley body part (2c), the first and second pulley body parts (2a, 2c) have a different diameter, the first and second pulley body parts (2a, 2c) being connected to one another via a connecting web (2b), and the sensor (53) detecting characteristics of the connecting web (2b) as a state variable (Z), the sensor (53) being connected in particular to the connecting web (2b).

## Revendications

1. Installation de téléphérique (100) comprenant un dispositif de surveillance (75), un câble de transport, tracteur ou porteur (101) ainsi qu'une pluralité de poulies (1), au moins quelques-unes des poulies (1) étant en appui sur le câble (101), et comprenant un capteur (53) pour détecter une variable d'état (Z), un appareil de commande (50), une source d'énergie électrique (51) ainsi qu'un dispositif de transmission sans fil (56), le capteur (53) étant relié au dispositif de surveillance (75) par l'intermédiaire de l'appareil de commande (50) et du dispositif de transmission sans fil (56) de manière à transmettre des signaux ou des données, **caractérisée en ce qu'**au moins une des poulies (1) comprend le capteur (53), l'appareil de commande (50), la source d'énergie électrique (51) ainsi que le dispositif de transmission sans fil (56).

2. Installation de téléphérique selon la revendication 1, **caractérisée en ce que** la poulie (1) est une poulie porteuse ou une poulie de maintien en position basse disposée sur un mât porteur.

3. Installation de téléphérique selon la revendication 1 ou 2, **caractérisée en ce que** la poulie (1) comprend comme capteur (53) au moins une jauge de contrainte (53c, 53d, 53e) ou un capteur de force, pour détecter un allongement de la poulie (1) ou pour détecter une force appliquée à la poulie (1).

4. Installation de téléphérique selon la revendication 3, **caractérisée en ce que** le capteur (53) comprend au moins une et de préférence au moins trois jauges de contrainte (53c, 53d, 53e) qui détectent, par rapport à un axe de rotation (11) de la poulie (1), un allongement se produisant dans la direction radiale.

5. Installation de téléphérique selon l'une des revendications précédentes, **caractérisée en ce que** la poulie (1) comprend comme capteur (53) un capteur GPS pour la détection de position.

6. Installation de téléphérique selon l'une des revendications précédentes, **caractérisée en ce qu'**une batterie de poulies (20) comprend une pluralité de poulies (1), et **en ce qu'**au moins deux des poulies (1) de la batterie de poulies (20) comprennent chacune un capteur (53), un appareil de commande (50) ainsi qu'un dispositif de transmission sans fil (56).

7. Procédé d'exploitation d'une installation de téléphérique (100) comprenant un câble de transport, tracteur ou porteur (101) ainsi qu'une pluralité de poulies (1), le câble (101) étant en appui sur au moins quelques-unes des poulies (1) et une force étant transmise par le câble (101) en appui à la poulie (1) respective, **caractérisé en ce qu'**une variable d'état (Z) de la poulie (1) est détectée au moyen d'un capteur (53) disposé sur la poulie (1), **en ce que** la variable d'état (Z) ou une valeur d'état (ZW) qui en est dérivée est transmise sans fil par la poulie (1) à un dispositif de surveillance (75), et **en ce que** l'installation de téléphérique (100) est surveillée en fonction de la variable d'état (Z) ou de la valeur d'état (ZW).

8. Procédé selon la revendication 7, **caractérisé en ce qu'**une force agissant sur la poulie (1) est détectée comme variable d'état (Z).

9. Procédé selon la revendication 7 ou 8, **caractérisé en ce que** la variable d'état (Z) d'une poulie (1) disposée sur un mât porteur (25) est mesurée lorsque le câble de transport, tracteur ou porteur (101) est à l'arrêt.

10. Procédé selon l'une des revendications 7 à 9, **caractérisé en ce que** la poulie (1) présente un axe de rotation (11), et **en ce qu'**une force agissant sur la poulie (1) dans la direction de l'axe de rotation (11) ou une force agissant transversalement à la direction de l'axe du câble (101) est détectée comme variable d'état (Z).

11. Procédé selon l'une des revendications 6 à 9, **caractérisé en ce que** la poulie (1) comprend un appareil de commande (50), **en ce que** le dispositif de surveillance (75) prédéfinit à l'appareil de commande (50) une valeur de consigne pour la variable d'état (Z) ou la valeur d'état (ZW) qui en est dérivée, et **en ce que** la variable d'état (Z) ou la valeur d'état (ZW) qui en est dérivée n'est transmise par la poulie (1) au dispositif de surveillance (75) que lorsque la variable d'état (Z) ou la valeur d'état (ZW) qui en est dérivée s'écarte de la valeur de consigne.

12. Procédé selon l'une des revendications 7 à 11, **caractérisé en ce qu'**une batterie de poulies (20) comprend une pluralité de poulies (1) avec chacune un capteur (53), chacun des capteurs (53) mesurant comme variable d'état (Z) au moins une accélération dans au moins une dimension et de préférence dans trois dimensions, et le dispositif de surveillance (75) déterminant à partir de ces variables d'état (Z) mesurées des propriétés mécaniques de la batterie de poulies (20).

13. Procédé selon l'une des revendications 7 à 12, **caractérisé en ce qu'**au moins certaines des poulies (1) comprennent chacune un capteur GPS (57) pour détecter la position respective des poulies (S1 , S2, S3), et **en ce que** les positions respectives des poulies (S1 , S2, S3) sont transmises au dispositif de surveillance (75).

14. Poulie (1) pour une installation de téléphérique (100), la poulie (1) comprenant une surface de roulement (3a) pour un câble de transport, tracteur ou porteur (101), **caractérisée en ce que** la poulie (1) comprend un capteur (53) pour détecter une variable d'état (Z), un appareil de commande (50), une source d'énergie électrique (51) ainsi qu'un dispositif de transmission sans fil (56), et **en ce que** le capteur (53) étant reliable à un dispositif de surveillance (75) de niveau supérieur par l'intermédiaire de l'appareil de commande (50) et du dispositif de transmission sans fil (56) de manière à transmettre des signaux ou des données.

15. Poulie (1) selon la revendication 14, **caractérisée en ce que** la poulie (1) comprend au moins une jauge de contrainte (53c, 53d, 53e) ou un capteur de force (53), pour détecter une force agissant sur la poulie (1).

16. Poulie (1) selon l'une des revendications 14 à 15, **caractérisée en ce que** la poulie (1) comprend un corps de poulie (2) ayant un axe de rotation (11), ainsi qu'une première partie de corps de poulie (2a) et une deuxième partie de corps de poulie (2c), la première et la deuxième partie de corps de poulie (2a, 2c) présentent un diamètre différent, la première et la deuxième partie de corps de poulie (2a, 2c) étant reliées l'une à l'autre par une barre de liaison (2b), et le capteur (53) détectant comme variable d'état (Z) des propriétés de la barre de liaison (2b), le capteur (53) étant en particulier relié à la barre de liaison (2b).
